# EUROPEAN PATENT APPLICATION

(11) **EP 3 557 838 A1**
(43) Date of publication of application: **23.10.2019**
(21) Application number: 18305482.4
(22) Date of filing: 19.04.2018
(51) Int. Cl.: H04L 29/06

(54) **MONITORING THE BEHAVIOUR OF AT LEAST ONE COMMUNICATION DEVICE**

(71) Applicant: GEMALTO SA, 92190 Meudon (FR)
(72) Inventor: MOSSE, Franck, 92190 Meudon (FR); SAHLI, Chaouki, 92190 Meudon (FR); MONTANARI, Patrick, 92190 Meudon (FR)
(74) Representative: Cassagne, Philippe M.J.

(57) **Abstract**

The invention relates to a first gateway server (101) interfacing a first local area network (111) with an external communication network (140) and configured to: monitor the behaviour of at least one communication device (120, 121, 122) connected to the first local area network (111) by analysing a data flow exchanged with the external communication network (140) through the gateway server (101) in order to provide a risk scoring in view of a set of at least one verification criteria, the at least one communication device (120, 121, 122) being disconnected if the at least one criteria is not met; provide to a remote server (130) which is also accessible from at least a second gateway server (102, 103) interfacing a second local area network (112, 113) with the external communication network (140) with an information element representative of the risk scoring for the second gateway server (102, 103) to forbid or authorize said communication device (120, 121, 122) or another communication device of the same type to be connected to the second local area network (112, 113).

## Description

### TECHNICAL FIELD

The present invention relates to a method and an apparatus for monitoring the behaviour of at least one communication device. It is applicable to the technical domain of network security for the Internet of Things.

### BACKGROUND OF THE INVENTION

According to the Recommendation ITU-T Y.2060 provided by the International Telecommunication institute, the Internet of things (loT) is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks. At present, loT is generally applied in fields such as security surveillance, automatic vending machines, public traffic systems, vehicle monitoring and management, industry process automatization, motor machineries, city informationalization.

The Internet of Things has been fully adopted. Communication devices connected to an loT network can be made and sold by anyone and are present everywhere. Such communication devices can be smart, expensive and sophisticated or on the contrary cheap and simple. As an example, an Original Equipment Manufacturer (OEM) can make connected bulbs. This manufacturer will not be able to propose devices with intelligence and at the same time keep prices low and remain competitive. OEM manufacturers are usually providing objects which are able to communicate over the Internet but which are often not able to communicate securely and are therefore offering a huge attack surface. This means that malicious people are able to illegitimately take control over those objects with little effort. Further, these communication devices generally are not able to detect a virus or an attack and they have limited capabilities for being easily upgraded or maintained. Further, communication devices generally lack of storage capacity which render software upgrades difficult with the consequence of not being able to close security breaches when detected.

There is therefore a need for providing a communication system allowing to control the access to an loT network by one or several loT devices.

### SUMMARY OF THE INVENTION

This invention relates to a first gateway server interfacing a first local area network with an external communication network and configured to:
- monitor the behaviour of at least one communication device connected to the first local area network by analysing a data flow exchanged with the external communication network through the gateway server in order to provide a risk scoring in view of a set of at least one verification criteria, the at least one communication device being disconnected if the at least one criteria is not met;
- provide to a remote server which is also accessible from at least a second gateway server interfacing a second local area network with the external communication network with an information element representative of the risk scoring for the second gateway server to forbid or authorize said communication device or another communication device of the same type to be connected to the second local area network.

According to an example, the at least one verification criteria is chosen by the remote server and then received by said gateway server.

According to an example, a set of one or several parameters indicating the types of measurements to be carried out is received from the remote server for enabling the determination of the risk scorings.

According to an example, the first gateway server is configured to identify the at least one communication device connected to the first local area network and to verify based on this identification if the access to the first local area network is allowed for this at least one communication device by sending an identifier of said communication device to the remote server and by receiving an answer determined by the remote server based on said identifier.

The invention also relates to a method for monitoring the behaviour of at least one communication device in a system composed of a first local area network associated to a first gateway server interfacing said first local area network with an external communication network, a second local area network associated to a second gateway server interfacing said first local area network with the external communication network and a remote server accessible from the first and second gateway servers, the method comprising the steps of:
- monitoring the behaviour of the at least one communication device connected to the first local area network by analysing a data flow exchanged with the external communication network through the gateway server in order to provide a risk scoring in view of a set of at least one verification criteria, the at least one communication device being disconnected if the at least one criteria is not met;
- providing to a remote server with an information element representative of the risk scoring for the second gateway server to forbid or authorize said communication device or another communication device of the same type to be connected to the second local area network.

According to an example, the method comprises the step of receiving by the first gateway server the at least one verification criteria, said at least one verification criteria being chosen by the remote server.

According to an example, the method comprises the step of receiving by the first gateway server from the remote server a set of one or several parameters indicating the types of measurements to be carried out for enabling the determination of the risk scorings.

According to an example, the set of one or several parameters indicating the types of measurements to be carried out for enabling the determination of the risk scorings comprises a parameter to determine the number of incoming requests *N_{IR}* detected by the gateway server over a predefined period of time *T_{IR}.*

According to an example, the set of one or several parameters indicating the types of measurements to be carried out for enabling the determination of the risk scorings comprises a parameter to determine the number of outcoming requests *N_{OR}* detected by the gateway server over a predefined period of time *T_{OR}.*

According to an example, the set of one or several parameters indicating the types of measurements to be carried out for enabling the determination of the risk scorings comprises a parameter for taking into account the volume of data *V_{data}* exchanged between the monitored communication device and the external network over a predefined period of time *T_{data}.*

According to an example, the set of one or several parameters indicating the types of measurements to be carried out for enabling the determination of the risk scorings comprises a parameter for using an identifier of the destination entity to which data will be transmitted by the communication device.

According to an example, Generalized Linear Models are used to determine the risk scoring.

According to an example, the risk scoring *RSᵢ* is compared to a threshold value *TH* for determining if the communication device has to be disconnected or not from the first local area network.

The invention also relates to a computer program product comprising instructions which, when the program is executed by a computer, cause the computer to carry out the steps of the method described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 provides an example of communication system allowing to monitor the behaviour of an loT device connected to a local access network;
- Figure 2 provides an example illustrating how a gateway server can analyze the data flows exchanged between one or several communication devices connected to a local area network and an external network.

### DETAILED DESCRIPTION

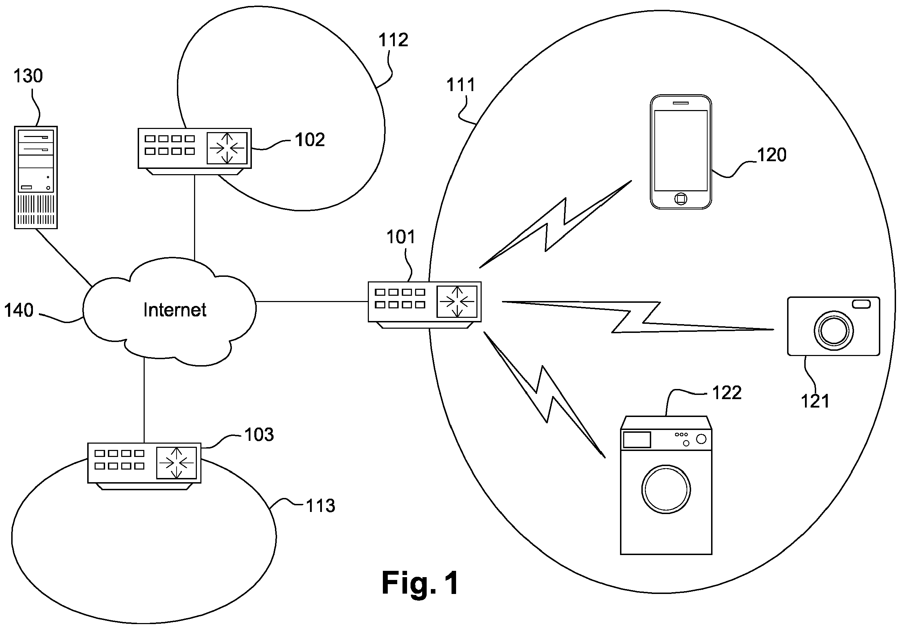

**Figure 1** provides an example of communication system allowing to monitor the behaviour of an loT device connected to a local access network.

In this description, the expression communication device refers to a piece of equipment with communication capabilities and optionally capacity of data capture, data storage, sensing and/or data processing. A communication device comprises for example a wireless communication module also called Machine Type Communication (MTC) module allowing transmission of data from one loT device to another or exchange of data between machines through UMTS/HSDPA, CDMA/EVDO, LTE, 5G, LoRa or other networks.

According to this example, one or several communication devices 120, 121, 122 are connected to a first local area network (LAN) 111. In this description, each of the communication devices N that is connected to a given local area network is designated with an index *i* with *i* ∈ [1; *N*]*.*

According to the example of figure 1, the communication devices 120, 121, 122 are able to communicate with other communication networks or remote servers which are localized outside of the first local area network 111. For that purpose, a gateway server 101 interconnects the first local area network 111 with an external network 140. This external network is for example a wide area network (WAN) such as the Internet.

One important role of the gateway server 101 is to interface the first local area network 111 with the external network 140.

Another role of the gateway server 101 is to analyze the data flow exchanged between the external network 140 and the communication devices 120, 121, 122 connected in the first local area network 111.

In addition to that, the gateway server 101 can gather information from one or several remote servers 130 and/or provide them with information beneficial for the management of loT devices by other local area networks. The gateway server 101 is the only network apparatus represented on figure 1 enabling the loT devices 120, 121, 122 to communicate through the first local area network 111. This is for simplification purpose in order to underline the main aspects of the invention. The skilled person will understand that other non-represented network elements such as antennas and/or base stations may also be needed.

In the example of figure 1, the second local area network 112 and the third local area network 113 are interfaced with the external network 140 using respectively a second gateway server 102 and a third gateway server 103. The local area networks 111, 112, 113 are isolated from other networks and data exchange with the outside world must be granted by and transit through the gateway server 101, 102, 103 associated to each of the local area networks 111, 112, 113. In other words, the communication devices 120, 121, 122 of a given local area network 111 are isolated and their behaviour is monitored by the gateway server 101.

According to an example, any new connection must be granted by the gateway server 101.

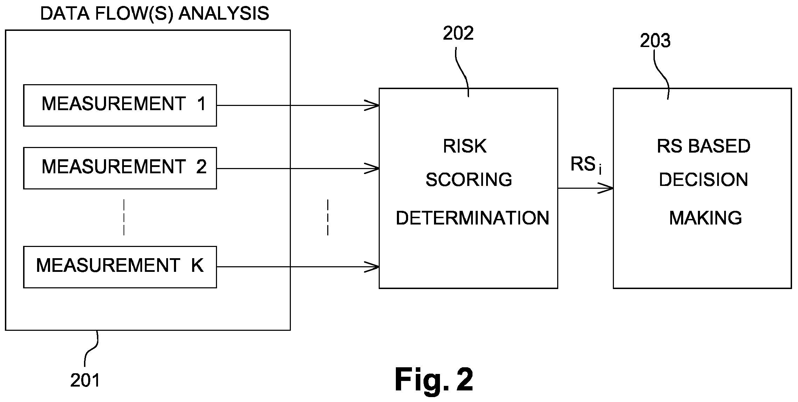

**Figure 2** provides an example illustrating how a gateway server can analyze the data flows exchanged between one or several communication devices connected to a local area network and an external network.

According to a preferred embodiment, when a given communication device i is connected to the first local area network, its behaviour is monitored by analysing 201 data flows exchanged with the external network 140 through the gateway server 101. The function of this or these analysis is to provide a risk scoring associated with at least one of the communication devices connected to the first local area network 111. The risk scoring associated to the i-th communication device connected to the first local area network is noted *RSᵢ.*

The risk scoring *RSᵢ* is the result of the analysis of the exchanged data flow and is designed to reflect the level of risk induced by leaving a given communication device 120, 121, 122 connected in the local area network 101.

The risk scorings are determined by the gateway servers 101-103 interfacing the local area networks 111, 112, 113 with the external network 140.

According to an embodiment of the invention, the determination 202 of the risk scorings is configured by the remote server 130. For that purpose, the remote server 130 can transmit a set of one or several parameters indicating the types of measurements to be carried out by the gateway server for enabling the determination of the risk scorings.

Alternatively or in complement, the parameters representative of the types of measurements to be used for calculating the risk scoring *RSᵢ* may be provisioned in advance for the gateway servers to be able to determine a risk scoring using these default settings without needing additional inputs from the remote server. The set of one or several default parameters may be in that case provisioned in the gateway server during its manufacturing or later on using its capabilities for over-the-air (OTA) updates.

The gateway server can be adapted to monitor data exchanges and request at different protocol levels, for example at the TCP (Transmission Control Protocol), UDP (User Data Protocol) or HTTP (Hypertext Transfer Protocol) levels, this list being provided for exemplary purpose only and is non-limitative.

The one or several types of measurements that can be used alone or in combination for determining the risk scoring can include one or several of the parameters as described below.

A first example is to use as a parameter to determine the risk scoring *RSᵢ* of a given communication device the number of incoming requests *N_{IR}* detected by the gateway server over a predefined period of time *T_{IR}.*

A second example is to use as a parameter to determine the risk scoring *RSᵢ* of a given communication device the number of outcoming requests *N_{OR}* detected by the gateway server over a predefined period of time *T_{OR}.*

Taking into account the number of incoming and/or incoming requests allows to detect denial-of-service (DoS) attacks.

A third example is to use as a parameter to determine the risk scoring *RSᵢ* of a given communication device the volume of data *V_{data}* exchanged between the monitored communication device and the external network over a predefined period of time *T_{data}.* The volume of data *V_{data}* can be for example expressed in bytes and determined by the gateway server at the IP level. In this example, this will allow to monitor UDP/TCP flows as well as HTTP and HTTPS flows.

A fourth example is to use as a parameter to determine the risk scoring *RSᵢ* of a given communication device an identifier of the destination entity to which data will be transmitted by the communication device.

A fifth example is to use as a parameter to determine the risk scoring *RSᵢ* of a given communication device an identifier of the source from which data is received by said communication device.

The identifier of the destination entity and/or the identifier of the identifier entity can be for example in the form of an IPv4 or an IPv6 address.

A sixth example is to use as a parameter to determine the risk scoring *RSᵢ* of a given communication device the number *Nₑₓₜ* of external connection over a predefined period of time *T_{OR},* that is to say the number of connections initiated by a communication device which is outside of the first local area network with the i-th communication device.

Other types of measurements can also be taken into account, such as the connections frequency, the connection duration, the connection time range.

In figure 2, K different types of measurements are performed 201 and provided to an algorithm 202 which is adapted to provide the risk scoring *RSᵢ* associated to the i-th communication device. Different algorithms belonging to the state of the art can be used for that purpose. For example, Generalized Linear Models (GLM), well-known machine learning methods or advanced statistical algorithms.

The combination of measurements carried out by the gateway server to monitor the behaviour of the communication devices connected the local area network can be different for each of them. For that purpose, the remote server can transmit instructions to select the combination of measurements that will be appropriate for each of the N communication devices connected to the local area network. For that purpose, the gateway server can transmit one or several data items characterizing the N communication devices for the remote server to decide which combination of measurement is best suited to monitor the behaviour of the different communication devices connected to the local area network. These data items correspond for example to some identifier of the device, such as an International Mobile Equipment Identity (IMEI). An indication of the type of communication device can also be used for that purpose, indicating for example is the communication device is a connected washing machine, a smart lock or any other type of communication device.

Once the score *RSᵢ* is available for the i-th communication device, it is used by the gateway server to decide 203 whether or not to allow this device to be or to stay connected to the local area network. As an example, the score *RSᵢ* can be compared to a threshold value *TH* . If *RSᵢ* > *TH,* the i-th communication device is not considered safe enough and is disconnected by the gateway server. The threshold value *TH* can be taken as a single value for each of the communication devices connected to the local area network or differentiated for each of them. It is noted *THᵢ* in that case. According to an example, the threshold value *TH* or values *THᵢ* used by the gateway server can be transmitted and/or updated by the remote server to the communication devices.

In addition to allow the access to the local area network as well as to allow a given communication device to communicate through an external network, the gateway server can also be configured to enable ciphering of the data transmitted or received by the communications device through the local area network and the external network. For that purpose, the gateway server can be provisioned with one or several private keys and communicate the associated public keys to the communicating entities for them to be able to encipher their communications. For that purpose, a public key infrastructure (PKI) can be used. According to another aspect, the gateway server can play the role of a transcoder between the gateway server and the local area network to which it is associated.

According to another embodiment, the gateway server can also implement a predefined grace period *T_{G}.* When a communication device that is not yet known first connects to the local area network to which the gateway server is associated, the communication device will not be disconnected, even if the result of the estimated risk scoring would normally lead to a disconnection. This grace period *T_{G}* allows in particular for a newly provisioned device to have an unusual behavior after the first boot. This will allow this newly connected device to download unusual amount of data needed for example for a firmware update of the download of configuration data.

The gateway server can be further configured to carry out additional analyses of a given communication device by proactively influencing its behavior. For that purpose, the gateway server can generate one or several request messages and transmit then to the local area network.

According to another example, the gateway server can be configured to let the communication device connected to the local area network despite the fact that the estimated risk scoring shows that the communication device is likely to be corrupted or dysfunctional. This will allow the gateway server to continue the monitoring of malicious behaviors in order to allow a deeper analyze of the attacker. For that purpose, a honeypot security mechanism can be implemented by the gateway server.

One important aspect is that a gateway server benefits from the knowledge of the remote server. The so-called remote server memorizes information coming from a plurality of gateway respectively associated to a plurality of local area network. Therefore, if a given communication device which was at some point in time connected to a given local area network and considered by the associated gateway server as unsecure, this information can be transmitted by said gateway server to the remote server. Therefore, when the same communication device tries to connect to second local area network of the system, there is no need for monitoring as the remote server will inform the gateway server associated to the second local area network that said device is unsecured and the connection will be refused as a consequence.

According to an example, the gateway server regularly report to the remote server the risk scoring value *RSᵢ* obtained for each communication device communication device connected to their associated local area network. The remote server can consolidate the data on a per model basis and determine or adapt the threshold value that is then transmitted to the gateway server of the system for them to determine if a given communication device connection can be allowed of not.

According to another example, the remote server is able to maintain a list of the manufacturers whose communication devices are allowed to be connected to the local area network of the system. This white list can them be transmitted to the gateway server for them to decide whether or not allowing a connection of a given communication device based on the identification of its manufacturer. Alternatively, a black list of forbidden manufacturer can be maintained by the remote server and communicated to the gateway server of the systems for them to rapidly detect unsecure communication devices. Using a black or a whit lists allows to take a decision faster than when monitoring statistically the behavior of the communication devices. White and/or black lists can be used as a complement or an alternative to statistical monitoring.

## Claims

1. A first gateway server (101) interfacing a first local area network (111) with an external communication network (140) and configured to:
- monitor the behaviour of at least one communication device (120, 121, 122) connected to the first local area network (111) by analysing a data flow exchanged with the external communication network (140) through the gateway server (101) in order to provide a risk scoring in view of a set of at least one verification criteria, the at least one communication device (120, 121, 122) being disconnected if the at least one criteria is not met;
- provide to a remote server (130) which is also accessible from at least a second gateway server (102, 103) interfacing a second local area network (112, 113) with the external communication network (140) with an information element representative of the risk scoring for the second gateway server (102, 103) to forbid or authorize said communication device (120, 121, 122) or another communication device of the same type to be connected to the second local area network (112, 113).

2. The first gateway server (101) according to claim 1, wherein the at least one verification criteria is chosen by the remote server and then received by said gateway server (101).

3. The first gateway server (101) according any of the preceding claims, wherein a set of one or several parameters indicating the types of measurements to be carried out is received from the remote server (130) for enabling the determination of the risk scorings.

4. The first gateway server (101) according to claim 1 configured to identify the at least one communication device (120, 121, 122) connected to the first local area network (111) and verify based on this identification if the access to the first local area network (111) is allowed for this at least one communication device (120, 121, 122) by sending an identifier of said communication device to the remote server (130) and by receiving an answer determined by the remote server (120, 121, 122) based on said identifier.

5. A method for monitoring the behaviour of at least one communication device in a system composed of a first local area network (111) associated to a first gateway server (101) interfacing said first local area network (111) with an external communication network (140), a second local area network (112) associated to a second gateway server (102) interfacing said first local area network (112) with the external communication network (140) and a remote server (130) accessible from the first (101) and second (102) gateway servers, the method comprising the steps of:
- monitoring the behaviour of the at least one communication device (120, 121, 122) connected to the first local area network (111) by analysing a data flow exchanged with the external communication network (140) through the gateway server (101) in order to provide a risk scoring in view of a set of at least one verification criteria, the at least one communication device (120, 121, 122) being disconnected if the at least one criteria is not met;
- providing to a remote server (130) with an information element representative of the risk scoring for the second gateway server (102, 103) to forbid or authorize said communication device (120, 121, 122) or another communication device of the same type to be connected to the second local area network (112, 113).

6. The method according to claim 5, comprising the step of receiving by the first gateway server (101) the at least one verification criteria, said at least one verification criteria being chosen by the remote server (130).

7. The method according to claim 5 or 6, comprising the step of receiving by the first gateway server (101) from the remote server (130) a set of one or several parameters indicating the types of measurements to be carried out for enabling the determination of the risk scorings.

8. The method according to claim 7, wherein the set of one or several parameters indicating the types of measurements to be carried out for enabling the determination of the risk scorings comprises a parameter to determine the number of incoming requests *N_{IR}* detected by the gateway server over a predefined period of time *T_{IR}.*

9. The method according to any of claims 7 or 8, wherein the set of one or several parameters indicating the types of measurements to be carried out for enabling the determination of the risk scorings comprises a parameter the number of outcoming requests *N_{OR}* detected by the gateway server over a predefined period of time *T_{OR}.*

10. The method according to any of claims 7 to 9, wherein the set of one or several parameters indicating the types of measurements to be carried out for enabling the determination of the risk scorings comprises a parameter for taking into account the volume of data *V_{data}* exchanged between the monitored communication device and the external network over a predefined period of time *T_{data}.*

11. The method according to any of claims 5 to 10, wherein the set of one or several parameters indicating the types of measurements to be carried out for enabling the determination of the risk scorings comprises a parameter for using an identifier of the destination entity to which data will be transmitted by the communication device.

12. The method according to any of claims 5 to 11, wherein Generalized Linear Models are used to determine the risk scoring.

13. The method according to any of claims 5 to 12, wherein the risk scoring *RSᵢ* is compared to a threshold value *TH* for determining if the communication device has to be disconnected or not from the first local area network.

14. A computer program product comprising instructions which, when the program is executed by a computer, cause the computer to carry out the steps of the method of any of claims 5 to 13.
